# EUROPÄISCHE PATENTSCHRIFT

(11) **EP 1 979 658 B1**
(45) Veröffentlichungstag und Bekanntmachung des Hinweises auf die Patenterteilung: **15.07.2009**
(21) Anmeldenummer: 06830472.4
(22) Anmeldetag: 08.12.2006
(51) Int. Cl.: F16K 31/124

(54) **UMSCHALTVENTIL**
REVERSING VALVE
SOUPAPE D'INVERSION

(30) Priorität: 17.01.2006 DE 202006000624 U
(43) Veröffentlichungstag der Anmeldung: 15.10.2008
(73) Patentinhaber: KraussMaffei Technologies GmbH, 80997 München (DE)
(72) Erfinder: SÖCHTIG, Wolfgang, 82110 Germering (DE)
(74) Vertreter: Zollner, Richard
(86) Internationale Anmeldenummer: PCT/EP2006/069473
(87) Internationale Veröffentlichungsnummer: WO 2007/082607

(56) Entgegenhaltungen:
- FR-A1- 2 784 443
- US-A- 1 356 130
- US-A1- 2004 245 381

## Beschreibung

Ein Umschaltventil ist zB. in Dokument US 2004/0245381 offenbart.

Die vorliegende Erfindung betrifft ein Umschaltventil, das insbesondere zum Zu- und Abschalten von Mischköpfen dient. Solche Ventile werden beispielsweise dann eingesetzt, wenn an einer Dosiermaschine mehrere Mischköpfe betrieben werden, wobei immer nur ein Mischkopf für einen Betrieb ausgewählt ist. Die anderen Mischköpfe sind in diesem Zeitraum abgeschaltet.

Um Fehlfunktionen zu vermeiden, ist eine absolute Dichtigkeit eines solchen Umschaltventils Grundvoraussetzung. Bei einer eventuellen Leckage eines Umschaltventils würde es zu einem Mengenverlust an einen anderen Mischkopf kommen, was wiederum zu Ausschussteilen führen könnte.

Bislang sind Umschaltventile eingesetzt worden, bei denen eine Schalteinrichtung in Form eines Ventilelements vorgesehen ist, das gegen einen Ventilsitz angelegt oder von dem Ventilsitz abgehoben werden konnte. Beim Anlegen des Ventilelements an den Ventilsitz wird ein Strömungsweg von einem Einlass, der mit einem Behälter verbunden ist, zu einem Auslauf, der mit einem Mischkopf verbunden ist, unterbrochen. Beim Abheben des Ventilelements vom Sitz wird ein solcher Strömungsweg geöffnet, so dass das von einer Dosiervorrichtung stammende Material zu einem Mischkopf gelangt.

Allerdings sind aufgrund der zum Teil erheblichen Drücke im Umschaltventil groß dimensionierte Antriebe für das Ventilelement erforderlich. So können im Einlassbereich Drücke bis zu 250 bar und darüber anliegen. Im Auslassbereich liegen die Drücke zum Teil (z. B. bei abgeschlossenem Ventil) im Bereich nur weniger Bar. Überdies können aufgrund der dynamischen Dichtungen bei bekannten Umschaltventilen Dichtigkeitsprobleme auftreten, die zu Leckagen führen. Aufgabe der vorliegenden Erfindung ist es daher, ein Umschaltventil anzugeben, das eine funktionssichere Umschaltung auch mit einer kleinen Antriebseinheit (z.B. Elektromagneten) gewährleistet.

Diese Aufgabe wird durch im Anspruch 1 angegebenen Merkmale gelöst.

Demgemäß ist ein Sperrelement vorgesehen, welches einen Strömungsweg zwischen einem Zulauf und einem Ablauf je nach Schaltstellung entweder schließen oder freigeben kann. Das Sperrelement weist einen Kolben auf, auf dessen beiden Seiten ein mit dem Fluid zu befüllender erster und zweiter Wirkraum vorgesehen sind. Allerdings weisen die Wirkräume - im Unterschied zum Stand der Technik - keine unmittelbaren Verbindungen zur Umgebung auf, so das es grundsätzlich keine Leckagen geben kann.

Überdies ist eine Vorsteuerstufe mit einem Schaltelement vorgesehen. Die Vorsteuerstufe ist derart ausgebildet, mit dem Zu- und Ablauf sowie mit den beiden Wirkräumen verbunden ist, das (i) in einem ersten Schaltzustand des Schaltelements in beiden Wirkräumen des Kolbens der Druck des Zulaufs anliegt und (ii) in einem zweiten Schaltzustand des Schaltelements im zweiten Wirkraum des Kolbens der Druck des Zulaufs und im ersten Wirkraum der Druck des Ablaufs anliegt.

Je nach Position des Sperrelements bzw. des damit verbundenen Kolbens können zum einen sichere Endstellungen des Sperrelements in den Endlagen gewährleisten und zum anderen Umschaltvorgänge sicher durchgeführt werden. Dabei ist ein Gedanke der vorliegenden Erfindung darin zu sehen, dass die stabilen Endlagen bzw. die Umschaltvorgänge aufgrund der Druckdifferenzen, die zwischen dem Vorlauf und dem Rücklauf herrschen, herbeigeführt bzw. veranlasst werden. Auf diese Art und Weise wird der Schaltvorgang des Sperrelements durch die im Fluid selbst enthaltene Energie herbeigeführt. Lediglich die Veranlassung von unterschiedlichen Druckverhältnissen im Umschaltventil wird durch die Vorsteuerstufe beeinflusst, wobei sich je nach den Druckverhältnissen in den beiden Wirkräumen zu den Seiten des Kolbens die Schaltpositionen automatisch einstellen.

Vorteilhafte Ausführungsformen der Erfindung sind in den Unteransprüchen definiert.

So kann das Sperrelement zur sicheren Schaltung in den Sperrzustand durch eine Feder vorgespannt sein.

Weiter ist es günstig, den zweiten Wirkraum zwischen dem Kolben und dem Sitz anzuordnen, so dass dieser zweite Wirkraum gleichzeitig als Teil des Strömungswegs zwischen dem Vorlauf und dem Rücklauf dient.

Auch die Vorsteuerstufe selbst kann zwei Räume, nämlich einen ersten und einen zweiten Vorsteuerraum aufweisen. Diese Vorsteuerräume sind dann vorzugsweise strömungsverbindbar, und zwar mittels eines Schaltelements, welches die dazwischengeschaltete Strömungsverbindung verschließt oder freigibt.

Gemäß einer besonderen Ausführungsform der Erfindung ist der erste Vorsteuerraum mit dem Zulauf sowie mit dem zweiten Wirkraum strömungsverbunden. Überdies kann zwischen dem Zulauf und dem ersten Vorsteuerraum eine Drosselstelle angeordnet sein. Diese Drosselstelle trägt zum Druckabfall vom Einlassbereich in den ersten Vorsteuerraum bei, wie aus dem nachfolgend noch zu beschreibenden Ausführungsbeispiel genauer deutlich wird.

Der zweite Vorsteuerraum ist vorzugsweise über einen Bypass-Kanal mit dem Ablauf strömungsverbunden. So ist es möglich, den zweiten Vorsteuerraum auf dem Druckniveau des Ablaufbereichs zu halten.

Natürlich kann das Schaltelement der Vorsteuerstufe pneumatisch, elektromagnetisch oder hydraulisch angetrieben sein. Aufgrund der erfindungsgemäßen Ausgestaltung des Umschaltventils sind hier jedoch keine großen Antriebsleistungen erforderlich.

Eine besonders bevorzugte Ausführungsform ist dann gewährleistet, wenn beim auf dem Sitz aufsitzenden Kolben die wirksame, zum Sitz hin gerichtete Kolbenfläche kleiner ist als die in entgegengesetzter Richtung wirkende Fläche. Auch dieses Merkmal wird aus dem beigefügten Ausführungsbeispiel noch deutlicher.

Die vorliegende Erfindung wird nachfolgend mit Bezug auf die beiliegenden Zeichnungen anhand eines Ausführungsbeispiels näher erläutert. Die Zeichnungen zeigen in
- Figur 1: eine schematische Teilschnittdarstellung einer Ausführungsform der vorliegenden Erfindung in einer ersten Schaltstellung und
- Figur 2: die in Figur 1 gezeigte Ausführungsform in gleicher schematischer Darstellung in einer zweiten Schaltstellung.

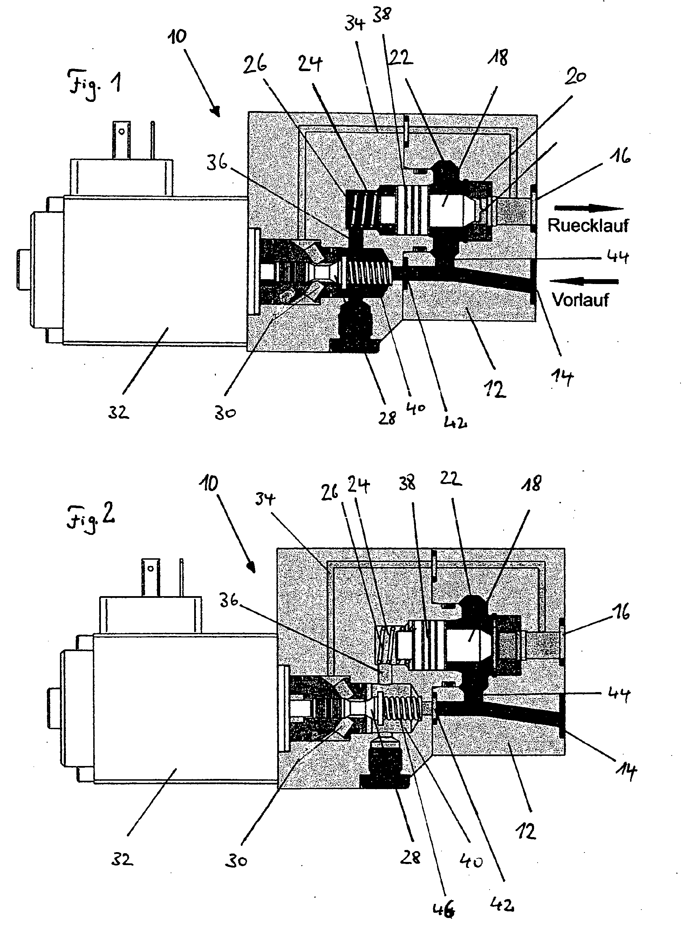

Das in den Figuren 1 und 2 dargestellte Umschaltventil 10 umfasst ein Gehäuse 12, welches zur besseren Montage wie in den Figuren 1 und 2 dargestellt zweiteilig ausgebildet sein kann. In dem Gehäuse 12 ist ein Einlasskanal 14 sowie ein Auslasskanal 16 dargestellt. In den Einlasskanal 14 mündet ein aus einer Hochdruckquelle (Dosiervorrichtung) stammendes Fluid (Vorlauf). Dabei können Drücke im Bereich bis 250 bar und darüber auftreten. Der Rücklauf ist mit einem vorliegend nicht dargestellten Mischkopf verbunden. Die Drücke im Rücklauf können sich in einem Bereich bewegen, der von geringfügig unterhalb dem Druckniveau des Vorlaufs bis in den Bereich weniger Bar (z.B. 8 bar) reicht.

Im Gehäuse 12 ist ein Raum ausgebildet, in dem ein Sperrelement 18, an dem ein Kolben 38 integral ausgebildet ist, hin und her beweglich (in Figur 1 und 2 nach links und rechts) aufgenommen ist. Dabei ist der Kolben 38 so dimensioniert, dass er mit der Wandung dieses Raums dichtend abschließt, wodurch auf beiden Seiten des Kolbens 38 Wirkräume veränderlicher Größe gebildet sind. Der erste Wirkraum ist mit dem Bezugszeichen 24, der zweiten Wirkraum mit dem Bezugszeichen 22 bezeichnet. Das Sperrelement 18 ist vorliegend bolzen- oder nadelförmig mit einer Spitze ausgebildet, wobei diese Spitze mit einem Sitz 20 am stromaufwärtsseitigen Ende des Auslasskanals 16 zusammenwirken kann. Ist nämlich das Sperrelement 18, wie in Figur 1 dargestellt, nach rechts verschoben, so sitzt deren Spitze auf dem Sitz 20 auf, wodurch eine Strömungsverbindung zwischen dem zweiten Wirkraum 22 und dem Auslasskanal 16 unterbunden ist.

Ist das Sperrelement 18 jedoch, wie in Figur 2 dargestellt, nach links verschoben, so ist es vom Sitz 20 abgehoben, wodurch eine Strömungsverbindung zwischen dem zweiten Wirkraum 22 und dem Auslasskanal 16 hergestellt ist. Am sitzfernen Ende des Sperrelements 18 stützt sich dieses gegen eine Spiralfeder 26 ab, wodurch das Sperrelement 18 generell in Richtung des Sitzes 20 vorgespannt ist.

Der zweite Wirkraum 22 ist über einen Kanal 44 unmittelbar mit dem Einlasskanal 14 verbunden.

Überdies ist im Umschaltventil eine Vorsteuerstufe ausgebildet, die im vorliegenden Ausführungsbeispiel unter anderem in Form des Steuerkolben 28, des zweiten Vorsteuerraums 30, des ersten Vorsteuerraums 40 und der zweiten Spiralfeder 46 realisiert ist. Die Vorsteuerstufe enthält zwei Vorsteuerräume, nämlich einen ersten Vorsteuerraum 40 und einen zweiten Vorsteuerraum 30, die über eine Öffnung miteinander strömungsverbunden sind. Diese Öffnung kann durch. Betätigung des Steuerkolbens 28 freigegeben oder verschlossen werden. Der Steuerkolben 28 ist mittels des elektromagnetisch arbeitenden Antriebs 32 hin und her bewegbar. In der Schaltstellung in Figur 1 lagert sich der Steuerkolben 28 an einem weiteren Sitz an, so dass der Strömungsweg zwischen dem ersten Vorsteuerraum 40 und dem zweiten Vorsteuerraum 30 unterbunden ist. In der in Figur 2 gezeigten Position ist der Steuerkolben 28 vom Sitz abgehoben, so dass eine Verbindung zwischen diesen beiden Vorsteuerräumen 30 und 40 gegeben ist.

Der Vorsteuerraum 30 ist über eine Bypassleitung 34 mit dem Auslasskanal 16 unmittelbar verbunden. Der Vorsteuerraum 40 ist einerseits mit dem ersten Wirkraum 24 über den Verbindungskanal 36 sowie andererseits unter Zwischenschaltung einer Drosselstelle 42 mit dem Einlasskanal 14 verbunden.

Im weiteren Verlauf soll die Funktionsweise des erfindungsgemäßen Umschaltventils beschrieben werden:
Im ersten Schaltzustand, welcher über den Antrieb 32 eingestellt wird und der in Figur 1 dargestellt ist, verschließt der Steuerkolben 28 die Strömungsverbindung zwischen den beiden Vorsteuerräumen 30 und 40. Aus diesem Grunde stellt sich im ersten Vorsteuerraum 40 der Druck des Einlasskanals 14 (z.B. 250 bar) ein. Dieser Druck liegt über dem Verbindungskanal 36 gleichzeitig im ersten Wirkraum 24 an und wirkt auf die diesem Wirkraum ausgesetzte Kolbenseite des Kolbens 38. Gleichzeitig liegt der Druck des Einlasskanals 14 über dem Kanal 44 auch im zweiten Wirkraum 22 an. Da jedoch aufgrund der Anlage des Sperrelement 18 am Düsensitz 20 die resultierende, zum Düsensitz hingewandte Fläche kleiner ist als die Wirkfläche im Bereich des Wirkraums 24, entsteht eine resultierende Kraft in Richtung des Sitzes 20, welche über die Spiralfeder 24 noch verstärkt wird. Insgesamt führt dies zu einer stabilen Endlage des Sperrelement 18 am Sitz 20, wodurch die Strömungsverbindung zwischen dem Einlasskanal 14 und dem Auslasskanal 16 wirksam unterbrochen ist. Es fließt daher kein Material von der Dosieranlage zu dem am Umschaltventil angeschlossenen Mischkopf.

Soll nun das Umschaltventil in die "Geöffnet-Stellung" gebracht werden, so wird, wie dies in Figur 2 dargestellt ist, der Steuerkolben 28 mittels des Antriebs 32 von seinem Sitz abgehoben, so dass es nun zu einer Strömungsverbindung zwischen dem ersten Vorsteuerraum 40 und dem zweiten Vorsteuerraum 30 kommt. Im Vorsteuerraum 30 liegt, bedingt durch die Verbindung über den Bypass-Kanal 34 mit dem Auslasskanal 16 das Druckniveau des Auslasskanals 16 vor. Da es nun zu einem Fluidaustausch zwischen dem ersten Vorsteuerraum 40 und dem zweiten Vorsteuerraum 30 kommt, wird sich auch im ersten Vorsteuerraum 40 das Druckniveau des Auslasskanals 16 einstellen. Dies ist vor allem dadurch bedingt, dass zwischen dem Einlasskanal 14 und dem ersten Vorsteuerraum 40 eine Drosselstelle 42 zwischengeschaltet ist, so dass das Material nur gebremst in den ersten Vorsteuerraum 40 überführt werden kann, wodurch sich der Druck im Einlasskanal 14 nicht unmittelbar in den ersten Vorsteuerraum 40 ausbreitet, sondern dorthin abfällt. Da aus diesem Grunde im ersten Vorsteuerraum 40 im Wesentlichen das Druckniveau des Auslasskanals 16 vorliegt, wird sich dieses Druckniveau über den Verbindungskanal 36 auch im ersten Wirkraum 24 einstellen. Damit gibt es beim Kolben 38 nunmehr eine Hochdruckseite im zweiten Wirkraum 22 gegenüber einem niedrigeren Druck im ersten Wirkraum 24. Das Resultat ist eine Verschiebung des Sperrelement 18 in den Figuren nach links, also gegen die Wirkung der Spiralfeder 26. Damit hebt sich die Spitze des Sperrelement 18 vom Sitz 20, wodurch die Strömungsverbindung zwischen dem Einlasskanal 14 und dem Auslasskanal 16 hergestellt wird. In diesem Zustand ist das Umschaltventil geöffnet und Material fließt von einer Dosieranlage zu einem Mischkopf.

Soll nun das Umschaltventil wieder geschlossen werden, so wird der Steuerkolben 28 aufgrund der Betätigung des Antriebs 32 wieder in die "Geschlossen-Stellung" verfahren. Damit stellt sich im ersten Vorsteuerraum 40 wie auch über den Verbindungskanal 36 im ersten Wirkraum 24 der Druck des Einlasskanals 14 ein. Nunmehr liegen wiederum in beiden Wirkräumen 22 und 24 die gleichen Drücke (Hochdruck des Einlasskanals) an, die jedoch nunmehr die gleich großen Wirkflächen beaufschlagen. Allerdings wird sich aufgrund der Federbeaufschlagung der Feder 26 auf das Sperrelement 18 dieses wieder in die "Geschlossen-Stellung" bewegen (Anlage an den Sitz 20), wo es dann wieder in die stabile Lage gelangt.

Auf die vorbeschriebene Art und Weise können durch die Druckbeeinflussung in den beiden Wirkräumen des Sperrelements sowohl eine sichere Umschaltung wie auch stabile Endlagen sicher erreicht werden, ohne dass es großer Schaltantriebe bedarf. Vielmehr macht man sich die Druckdifferenz in den Einlass- und Auslasskanälen zunutze. Für die Schaltung selbst können relativ gering dimensionierte Antriebe elektrischer, pneumatischer oder hydraulischer Art vorgesehen werden.

Insofern stellt das beschriebene Ventil hydraulisch gesehen ein elektrisch betätigtes, vorgesteuertes 2/2-Wege-Ventil dar.

Ist der Magnet in der elektromagnetisch ausgeführten Antriebseinheit nicht angesteuert, so schließt die Vorstufe und die Drücke beidseitig des Kolbens stehen im Gleichgewicht. Die Feder drückt den Sperrkolben an den Dichtsitz und die druckbeaufschlagten Flächen ergeben eine zusätzliche resultierende Kraft in Richtung des Sitzes.

Wird der Magnet zum Öffnen des Sperrkolbens angesteuert, so kommt es zu einem Druckausgleich zwischen dem ersten Wirkraum und dem Auslasskanal, wodurch das Sperrelement nunmehr gegen die Federkraft aufgedrückt wird.

Das so beschriebene Ventil arbeitet beispielsweise rein elektrisch und benötigt keine zusätzlichen Hilfsenergien, also auch keine zusätzliche Hydraulik. Von besonderem Vorteil zeigen sich auch die Vermeidung von dynamischen Dichtungen zur Umgebung, so dass es zu keiner Leckage kommen kann.

### Bezugszeichenliste

- 10: Umschaltventil
- 12: Ventilgehäuse
- 14: Einlasskanal
- 16: Auslasskanal
- 18: Sperrelement
- 20: Sitz für Sperrelement
- 22: Zweiter Wirkraum
- 24: Erster Wirkraum
- 26: Erste Spiralfeder
- 28: Steuerkolben
- 30: Zweiter Vorsteuerraum
- 32: Antrieb für Steuerkolben (elektrisch)
- 34: Bypass-Leitung
- 36: Verbindungskanal
- 38: Kolben des Sperrelements
- 40: Erster Vorsteuerraum
- 42: Drosselstelle
- 44: Kanal
- 46: Zweite Spiralfeder

## Patentansprüche

1. Umschaltventil, insbesondere für das Zu- und Abschalten eines Mischkopfes umfassend
- ein Gehäuse(12), in dem ein Fluid-Zulauf (14) und ein Fluid-Ablauf (16) vorgesehen sind
- sowie ein Sperrelement (18), welches mit einem Sitz (20) im Bereich des Fluid-Ablaufs (16) derart zusammenwirkt, dass
-- beim Aufsetzen des Sperrelements (18) auf den Sitz (20) ein Strömungsweg zwischen dem Zulauf (14) und dem Ablauf (16) geschlossen ist und
-- beim Abheben des Sperrelements (18) vom Sitz (20) der Strömungsweg zwischen dem Zulauf (14) und dem Ablauf (16) geöffnet ist,
- wobei das Sperrelement (18) einen Kolben (38) aufweist, auf dessen beiden Seiten ein mit dem Fluid zu befüllender erster (24) und zweiter (22) Wirkraum vorgesehen sind,
**dadurch gekennzeichnet, dass**
eine Vorsteuerstufe (28, 30, 40, 44) mit einem Schaltelement (28) vorgesehen ist, und die Vorsteuerstufe (28, 30, 40, 44) derart ausgebildet, mit dem Zu- (14) und Ablauf (16) sowie mit den beiden Wirkräumen (22, 24) verbunden ist, dass
+ in einem ersten Schaltzustand des Schaltelements (28) in beiden Wirkräumen des Kolbens (38) der Druck des Zulaufs (14) anliegt und
+ in einem zweiten Schaltzustand des Schaltelements (28) im zweiten Wirkraum (22) des Kolbens (18) der Druck des Zulaufs (14) und im ersten Wirkraum (24) der Druck des Ablaufs (16) anliegt.

2. Umschaltventil nach Anspruch 1,
**dadurch gekennzeichnet, dass**
das Sperrelement (18) durch eine Feder (26) in Verschlussrichtung vorgespannt ist.

3. Umschaltventil nach Anspruch 1 oder 2,
**dadurch gekennzeichnet, dass**
der zweite Wirkraum (22) zwischen dem Kolben (18) und dem Sitz (20) vorgesehen ist.

4. Umschaltventil nach einem der vorhergehenden Ansprüche,
**dadurch gekennzeichnet, dass**
die Vorsteuerstufe (28, 30, 40, 44) einen ersten (40) und einen zweiten (30) Vorsteuerraum aufweist, deren dazwischengeschaltete Strömungsverbindung mittels dem Schaltelement (28) verschließ- und freigebbar ist.

5. Umschaltventil nach Anspruch 4,
**dadurch gekennzeichnet, dass**
der erste Vorsteuerraum (40) mit dem Zulauf (14) sowie mit dem zweiten Wirkraum (22) strömungsverbunden ist.

6. Umschaltventil nach Anspruch 4 oder 5,
**dadurch gekennzeichnet, dass**
zwischen dem Zulauf (14) und dem ersten Vorsteuerraum (40) eine Drosselstelle (42) vorgesehen ist.

7. Umschaltventil nach einem der vorhergehenden Ansprüche,
**dadurch gekennzeichnet, dass**
der zweite Vorsteuerraum (30) mit dem Ablauf (16) über einen Bypass-Kanal (34) strömungsverbunden sind.

8. Umschaltventil nach einem der vorhergehenden Ansprüche,
**dadurch gekennzeichnet, dass**
das Schaltelement (28) der Vorsteuerstufe (28, 30, 40, 44) pneumatisch, elektromagnetisch oder hydraulisch angetrieben ist.

9. Umschaltventil nach einem der vorhergehenden Ansprüche,
**dadurch gekennzeichnet, dass**
die bei auf dem Sitz (20) aufsitzenden Kolben (18) wirksame, zum Sitz hin gerichtete Kolbenfläche kleiner ist, als die in entgegengesetzter Richtung wirkende Fläche.

## Claims

1. Reversing valve, in particular for opening and shutting off a mixing head, comprising
- a housing (12) in which a fluid supply (14) and a fluid drain (16) are provided,
- and a blocking element (18), which interacts with a seat (20) in the area of the fluid drain (16), in such a manner that
-- when said locking element (18) is resting on the seat (20), a flow path between the supply (14) and the drain (16) is closed, and
-- when said locking element (18) is raised from the seat (20), the flow path between the supply (14) and the drain (16) is opened,
-- wherein the locking element (18) has a piston (38), on either side of which a first working chamber (24) and second working chamber (22) are provided, that are to be filled with the fluid,
**characterized in that**
a pilot stage (28, 30, 40, 44) with a switching element (28) is provided, and said pilot stage (28, 30, 40, 44) is constructed and connected to the supply (14) and drain (16), in addition to the two working chambers (22, 24), in such a way that
+ in a first switching state of the switching element (28) the pressure of the supply (14) prevails in both working chambers of the piston (38), and
+ in a second switching state of the switching element (28) the pressure of the supply (14) prevails in the second working chamber (22) of the piston (18) and the pressure of the drain (16) prevails in the first working chamber (24).

2. Reversing valve according to Claim 1,
**characterized in that**
the blocking element (18) is pre-tensioned in the closure direction by means of a spring (26).

3. Reversing valve according to Claim 1 or 2,
**characterized in that**
the second working chamber (22) is provided between the piston (18) and the seat (20).

4. Reversing valve according to any one of the preceding claims,
**characterized in that**
the pilot stage (28, 30, 40, 44) has a first (40) and a second (30) pilot chamber, and the flow connection that is switched between said pilot chambers can be closed off and released by means of the switching element (28).

5. Reversing valve according to Claim 4,
**characterized in that**
the first pilot chamber (40) is flow-connected to both the supply (14) and the second working chamber (22).

6. Reversing valve according to Claim 4 or 5,
**characterized in that**
a throttle point (42) is provided between the supply (14) and the first pilot chamber (40).

7. Reversing valve according to any one of the preceding claims,
**characterized in that**
the second pilot chamber (30) is flow-connected to the drain (16) via a bypass channel (34).

8. Reversing valve according to any one of the preceding claims,
**characterized in that**
the switching element (28) of the pilot stage (28, 30, 40, 44) is driven pneumatically, electromagnetically or hydraulically.

9. Reversing valve according to any one of the preceding claims,
**characterized in that**
when the piston (18) is resting on the seat (20), the effective piston area directed towards the seat is smaller than the area acting in the opposite direction.

## Revendications

1. Vanne de commutation, en particulier pour la mise en circuit et hors circuit d'une tête mélangeuse comprenant
- un boîtier (12), dans lequel sont prévues une arrivée de fluide (14) et une sortie de fluide (16)
- et un élément de blocage (18), qui coopère avec un siège (20) dans la zone de la sortie de fluide (16) de telle sorte que
-- un chemin d'écoulement entre l'arrivée (14) et la sortie (16) est fermé lors de la pose de l'élément de blocage (18) sur le siège (20) et
-- le chemin d'écoulement entre l'arrivée (14) et la sortie (16) est ouvert lors du soulèvement de l'élément de blocage (18) du siège (20),
- l'élément de blocage (18) présentant un piston (38), sur les deux côtés duquel sont prévus un premier espace actif (24) et un second espace actif (22) à remplir avec le fluide,
**caractérisée en ce que**
il est prévu un étage pilote (28, 30, 40, 44) avec un élément de commutation (28) et l'étage pilote (28, 30, 40, 44) est conçu et est relié à l'arrivée (14) et à la sortie (16) ainsi qu'aux deux espaces actifs (22, 24), de telle sorte que,
+ dans un premier état de commutation de l'élément de commutation (28), la pression de l'arrivée (14) s'applique dans les deux espaces actifs du piston (38) et,
+ dans un second état de commutation de l'élément de commutation (28), la pression de l'arrivée (14) s'applique dans le second espace actif (22) du piston (18) et la pression de la sortie (16) dans le premier espace actif (24).

2. Vanne de commutation selon la revendication 1,
**caractérisée en ce que**
l'élément de blocage (18) est précontraint par un ressort (26) dans le sens de fermeture.

3. Vanne de commutation selon la revendication 1 ou 2,
**caractérisée en ce que**
le second espace actif (22) est prévu entre le piston (18) et le siège (20).

4. Vanne de commutation selon l'une quelconque des revendications précédentes,
**caractérisée en ce que**
l'étage pilote (28, 30, 40, 44) présente un premier espace pilote (40) et un second espace pilote (30), dont la liaison d'écoulement intercalée peut être fermée et libérée au moyen de l'élément de commutation (28).

5. Vanne de commutation selon la revendication 4,
**caractérisée en ce que**
le premier espace pilote (40) est relié par écoulement à l'arrivée (14) ainsi qu'au second espace actif (22).

6. Vanne de commutation selon la revendication 4 ou 5,
**caractérisée en ce que**
un point d'étranglement (42) est prévu entre l'arrivée (14) et le premier espace pilote (40).

7. Vanne de commutation selon l'une quelconque des revendications précédentes,
**caractérisée en ce que**
le second espace pilote (30) est relié par écoulement à la sortie (16) au moyen d'un canal de dérivation (34).

8. Vanne de commutation selon l'une quelconque des revendications précédentes,
**caractérisée en ce que**
l'élément de commutation (28) de l'étage pilote (28, 30, 40, 44) est entraîné de façon pneumatique, électromagnétique ou hydraulique.

9. Vanne de commutation selon l'une quelconque des revendications précédentes,
**caractérisée en ce que**,
lorsque le piston (18) repose sur le siège (20), la surface de piston efficace, dirigée vers le siège, est inférieure à la surface agissant dans le sens opposé.
